# EUROPÄISCHE PATENTANMELDUNG

(11) **EP 4 092 054 A1**
(43) Veröffentlichungstag der Anmeldung: **23.11.2022**
(21) Anmeldenummer: 21174063.4
(22) Anmeldetag: 17.05.2021
(51) Int. Cl.: C08F 8/12, C08F 8/24, C08F 8/30, C08F 212/14, C08F 212/08

(54) **VERFAHREN ZUR HERSTELLUNG VON ANIONENAUSTAUSCHERN**

(71) Anmelder: LANXESS Deutschland GmbH, 50569 Köln (DE)
(72) Erfinder: KOOP, Bernd, 50668 Köln (DE)

(57) **Zusammenfassung**

Die vorliegende Erfindung betrifft ein neues Verfahren zur Herstellung von Anionenaustauschern.

## Beschreibung

Die vorliegende Erfindung betrifft ein neues Verfahren zur Herstellung von Anionenaustauschern.

Ein aus z.B. der EP-B 1000660 bekanntes Verfahren zur Herstellung von Anionenaustauschern ist die Umsetzung von chlormethyliertem, vinylaromatischem Polymerisat mit Ammoniak um Anionenaustauscher mit primären Amingruppen herzustellen. Nachteilig an diesem Verfahren ist aber die geringe Ausbeute, die bei der Umsetzung erzielt wird. Üblicherweise werden die chlormethylierten, vinylaromatischen Polymerisate daher mit primären, sekundären oder tertiären Aminen umgesetzt und als Anionenaustauscher eingesetzt.

Bei der Umsetzung von chlormethyliertem, vinylaromatischem Polymerisat mit Ammoniak, primären oder sekundären Aminen erhält man Austauscher mit einer geringeren als theoretisch zu erwartenden Austauschkapazität, da das Amin mehrfach mit den chlormethylierten Gruppen reagiert und eine unerwünschte Sekundärvernetzung erzeugt.

Die DD-A 79152 beschreibt die Umsetzung eines chlormethylierten, vinylaromatischen Polymerisats mit Hexamethylentetramin zu einem aminomethylierten, vinylaromatischen Polymerisat. Nachteilig ist hierbei, dass nur ein kleiner Teil des Stickstoffs an das Polymer gebunden wird.

Ein weiteres Verfahren zur Herstellung von Anionenaustauschern mit primären Aminfunktionalitäten ist aus der EP-B 1078688 bekannt. Hierbei wird das vinylaromatische Polymerisat mit einem Bis(phthalimidomethyl)ether amidomethyliert und dann hydrolysiert. Der Bis(phthalimidomethyl)ether wird üblicherweise zunächst aus Phthalimid und Formaldehyd in Gegenwart von Schwefelsäure hergestellt und dann das vinylaromatische Polymerisat zugegeben. Nach der Amidomethylierung wird der Anionenaustauscher mit primären Aminfunktionalitäten durch Hydrolyse mit Säuren oder Basen aus dem amidomethylierten Polymerisat hergestellt. Dieser Anionenaustauscher kann durch Funktionalisierung mit Alkylierungsmitteln zu stark-, schwach und gemischtbasischen Anionenaustauschern mit sekundären, tertiären und quartären Aminfunktionalitäten weiter umgesetzt werden.

Auch dieses Verfahren besitzt Nachteile, da instabile Zwischenprodukte erzeugt werden, die die Reaktionsführung erschweren und auch Nebenprodukte anfallen, die aufwendig aufgearbeitet oder entsorgt werden müssen.

Aus der JP-A 51005392 und der JP-A 51034295 sind Verfahren zur Herstellung von Anionenaustauschern bekannt, bei denen das acylaminomethylierte, vinylaromatische Polymerisat durch Umsetzung des vinylaromatischen Polymerisates mit organischen Nitrilen und Formaldehyd in einer Friedel-Crafts analogen, katalysierten Alkylierung am Phenylring hergestellt und der Anionenaustauscher durch Hydrolyse gewonnen wird.

Auch in diesem Verfahren entstehen instabile Zwischenprodukte, die die Reaktionsführung erschweren und hohe Mengen an ökologisch bedenklichen Lösungsmitteln anfallen.

Es bestand daher weiterhin Bedarf nach einem Verfahren mit dem die Nachteile des Standes der Technik überwunden werden können und mit dem Anionenaustauscher in hoher Ausbeute hergestellt werden können.

Es wurde jetzt überraschend gefunden, dass chlormethylierte, vinylaromatische Polymere durch Umsetzung mit einem Nitril in Gegenwart eines metallhaltigen Katalysators und nachfolgender Hydrolyse zu Anionenaustauschern in guter Ausbeute umgesetzt werden können.

Gegenstand der vorliegenden Erfindung ist daher ein Verfahren zur Herstellung von Anionenaustauschern der Formel (I) 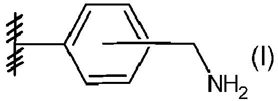 wobei 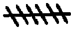 einen vinylaromatischen Polymerrest darstellt,
dadurch gekennzeichnet, dass

in einem Schritt a) chlormethyliertes, vinylaromatisches Polymer der Formel (II) 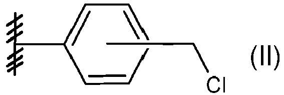 wobei 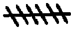 die oben genannte Bedeutung besitzt, mit mindestens einem Nitril der Formel (III)

R¹CN (III)

wobei R¹ = geradkettiges, zyklisches oder verzweigtes C₁-C₈-Alkyl, Phenyl oder Benzyl ist, und das Phenyl und Benzyl durch mindestens einen geradkettigen, zyklischen oder verzweigten C₁-C₈-Alkylrest substituiert sein kann,
in Gegenwart eines metallhaltigen Katalysators zu einem amidomethylierten, vinylaromatischen Polymer der Formel (IV) 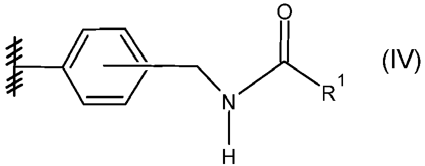 umgesetzt wird und R¹ die oben genannte Bedeutung besitzt und das amidomethylierte, vinylaromatische Polymer der Formel (IV) in einem Schritt b) durch Umsetzung mit einer Säure oder Base zum Anionenaustauscher der Formel (I) hydrolysiert wird.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Bevorzugt ist R¹ ein geradkettiges oder verzweigtes C₁-C₄-Alkyl. Besonders bevorzugt ist R¹ = Methyl, Ethyl, n-Propyl oder Isopropyl. Ganz besonders bevorzugt ist R¹ = Methyl.

Falls R¹ = Phenyl oder Benzyl ist, dann ist dieses bevorzugt nicht substituiert. Falls das Phenyl und Benzyl substituiert ist, dann bevorzugt durch einen geradkettigen, zyklischen oder verzweigten C₁-C₈-Alkylrest.

C₁-C₈-Alkyl steht im Rahmen der Erfindung für einen geradkettigen, zyklischen oder verzweigten Alkylrest mit 1 bis 8 (C₁-C₈) Kohlenstoffatomen, noch weiter bevorzugt mit 1 bis 4 (C₁-C₄) Kohlenstoffatomen. Vorzugsweise steht C₁-C₈-Alkyl für Methyl, Ethyl, n-Propyl, Isopropyl, n-, i-, s- oder t-Butyl, Cyclopropyl, Cyclobutyl, Cyclopentyl, n-Hexyl, Cyclohexyl, n-Pentyl, 1-Methylbutyl, 2-Methylbutyl, 3-Methylbutyl. Besonders bevorzugt steht C₁-C₈-Alkyl bzw. C₁-C₄-Alkyl für Ethyl, Methyl, n-Propyl oder Isopropyl.

Als chlormethylierte, vinylaromatische Polymere der Formel (II) werden vorzugsweise Copolymere aus mindestens einem monovinylaromatischem Monomeren ausgewählt aus der Gruppe Styrol, Vinyltoluol, Ethylstyrol, α-Methylstyrol, Chlorstyrol oder Chlormethylstyrol und Mischungen aus mindestens einem dieser Monomeren mit mindestens einer polyvinylaromatischen Verbindung (Vernetzern) ausgewählt aus der Gruppe Divinylbenzol, Divinyltoluol, Trivinylbenzol, Triallylisocyanurat, Divinylnaphtalin und/oder Trivinylnaphtalin oder Mischungen dieser polyvinylaromatischen Verbindungen eingesetzt.

Besonders bevorzugt wird als chlormethyliertes, vinylaromatisches Polymer der Formel (II) ein Styrolcopolymer, noch weiter bevorzugt ein Styrol-Divinylbenzol-Copolymer eingesetzt. Ein Styrol-Divinylbenzol-Copolymer ist ein durch die Verwendung von Divinylbenzol vernetztes Copolymer. Das chlormethylierte, vinylaromatische Polymer der Formel (II) weist vorzugsweise eine kugelförmige Form auf.

In dem chlormethylierten, vinylaromatischen Polymer in der Formel (II) ist ein -CH₂-Cl an einem Phenylrest gebunden.

Bevorzugt weisen die erfindungsgemäß verwendeten chlormethylierten, vinylaromatischen Polymere der Formel (II) eine makroporöse Struktur auf.

Die Begriffe mikroporös oder gelförmig bzw. makroporös sind in der Fachliteratur bereits, beispielsweise in Seidl, Malinsky, Dusek, Heitz, Adv. Polymer Sci., 1967, Vol. 5, S. 113 bis 213, eingehend beschrieben worden. Dort werden ebenfalls die möglichen Messmethoden zur Makroporosität, z.B. Quecksilberporosimetrie und BET Bestimmung, beschrieben. Im Allgemeinen und vorzugsweise weisen die Poren der makroporösen Polymerisate der erfindungsgemäß eingesetzten chlormethylierten, vinylaromatischen Polymere der Formel (II) einen Durchmesser von 20 nm bis 100 nm auf.

Bevorzugt weisen die erfindungsgemäß verwendeten chlormethylierten, vinylaromatischen Polymere der Formel (II) eine monodisperse Verteilung auf.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

Das chlormethylierte, vinylaromatische Polymer der Formel (II) weist vorzugsweise einen Durchmesser von 200 bis 1500 µm auf.

Das chlormethylierte, vinylaromatische Polymer der Formel (II) weist vorzugsweise eine kugelförmige Form auf.

Vorzugsweise enthält das chlormethylierte, vinylaromatische Polymer der Formel (II) 88 Mol. % bis 98 Mol. % monovinylaromatische Monomeren bezogen auf die Gesamtstoffmenge des Polymeren. Vorzugsweise enthält das chlormethylierte, vinylaromatische Polymer der Formel (II) 2 Mol. % bis 12 Mol. % polyvinylaromatische Monomeren bezogen auf die Gesamtstoffmenge des Polymeren.

Der Anionenaustauscher der Formel (I) weist vorzugsweise einen Durchmesser von 200 bis 1500 µm auf.

Bevorzugt weist der Anionenaustauscher der Formel (I) eine makroporöse Struktur auf.

Bevorzugt weist der Anionenaustauscher der der Formel (I) eine monodisperse Verteilung auf.

Vorzugsweise enthält der Anionenaustauscher der Formel (I) 88 Mol. % bis 98 Mol. % monovinylaromatische Monomeren bezogen auf die Gesamtstoffmenge des Polymeren.

Vorzugsweise enthält der Anionenaustauscher der Formel (I) 2 Mol. % bis 12 Mol. % polyvinylaromatische Monomeren bezogen auf die Gesamtstoffmenge des Polymeren.

Die Herstellung der in Schritt a) eingesetzten chlormethylierten, vinylaromatischen Polymere der Formel (II) erfolgt bevorzugt dadurch, dass man in einem Schritt 1a)
1a) Monomertröpfchen aus wenigstens einer monovinylaromatischen Verbindung und wenigstens einer polyvinylaromatischen Verbindung und wenigstens einem Initiator umsetzt und
1b) das Polymer aus Schritt 1a) chlormethyliert wird.

In Schritt 1a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Schritt 1a) bevorzugt Styrol, Vinyltoluol, Ethylstyrol, α-Methylstyrol, Chlorstyrol, oder Chlormethylstyrol eingesetzt.

Die monovinylaromatischen Verbindungen werden bevorzugt in Mengen > 50 Gew.%, bezogen auf das Monomer oder dessen Mischung mit weiteren Monomeren, besonders bevorzugt zwischen 55 Gew. % und 70 Gew. % bezogen auf das Monomer oder dessen Mischung mit weiteren Monomeren eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Sschritt 1a) Divinylbenzol, Divinyltoluol, Trivinylbenzol, Triallylisocyanurat, Divinylnaphthalin oder Trivinylnaphtalin, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Polymers ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Die Ausbildung makroporöser, vinylaromatischer Polymere erfolgt vorzugsweise durch Zusatz von Inertmaterialien, bevorzugt wenigstens eines Porogens, zu der Monomermischung bei der Polymerisation, um im Polymer eine makroporöse Struktur zu erzeugen. Insbesonders bevorzugte Porogene sind Hexan, Octan, Isooctan, Isododecan, Pentamethylheptan, Methylethylketon, Butanol oder Octanol und deren Isomeren. Es sind vor allem organische Substanzen geeignet, die sich im Monomeren lösen, das Polymer aber schlecht lösen bzw. quellen (Fällmittel für Polymere), beispielsweise aliphatische Kohlenwasserstoffe (Farbenfabriken Bayer DBP 1045102, 1957; DBP 1113570, 1957).

In US-B 4382124 werden als Porogen die ebenfalls im Rahmen der vorliegenden Erfindung bevorzugt einzusetzenden Alkohole mit 4 bis 10 Kohlenstoffatomen zur Herstellung makroporöser vinylaromatischer Polymere auf Styrol/Divinylbenzol-Basis eingesetzt. Ferner wird eine Übersicht der Herstellmethoden makroporöser vinylaromatischer Polymere gegeben.

Porogene werden bevorzugt in einer Menge von 25 Gew. % bis 45 Gew.% bezogen auf die Menge der organische Phase eingesetzt.

Bevorzugt wird in Schritt 1a) mindestens ein Porogen zugesetzt.

Die gemäß Schritt 1a) hergestellten vinylaromatischen Polymere können in heterodisperser oder monodisperser Form hergestellt werden.

Die Herstellung heterodisperser vinylaromatischer Polymere geschieht nach allgemeinen, dem Fachmann bekannten Verfahren, z.B. mit Hilfe der Suspensionspolymerisation.

Bevorzugt werden monodisperse, vinylaromatische Polymere in Schritt 1a) hergestellt.

In einer bevorzugten Ausführungsform der vorliegenden Erfindung kommen in Schritt 1a) mikroverkapselte Monomertröpfchen bei der Herstellung von monodispersen, vinylaromatischen Polymeren zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln, wie beispielsweise Formaldehyd oder Glutardialdehyd, gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen, wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen, vinylaromatischen Polymeren in Schritt 1a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazino-diessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten, monodispersen Monomertröpfchen zum monodispersen, vinylaromatischen Polymer erfolgt bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose, Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen, vinylaromatischen Polymer kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt vorzugsweise 0,5 - 500 mmol/l, besonders bevorzugt 2,5 - 100 mmol/l.

Die Rührgeschwindigkeit bei der Polymerisation zum monodispersen, vinylaromatischen Polymer ist weniger kritisch und hat im Gegensatz zur herkömmlichen Polymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt vorzugsweise 1 : 0,75 bis 1 : 20, besonders bevorzugt 1 : 1 bis 1 : 6.

Die Polymerisationstemperatur zum monodispersen, vinylaromatischen Polymer richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis etwa 20 Stunden. Es hat sich bewährt, ein Temperaturprogramm anzuwenden, bei dem die Polymerisation bei niedriger Temperatur, vorzugsweise 60°C, begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse, vinylaromatische Polymer mit üblichen Methoden, beispielsweise durch Filtrieren oder Dekantieren, isoliert und gegebenenfalls gewaschen.

Die Herstellung der monodispersen, vinylaromatischen Polymere mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen, vinylaromatischen Polymere mit Hilfe des Jetting Prinzips oder des Seed-Feed-Prinzips.

Bevorzugt wird in Schritt 1a) ein makroporöses, monodisperses, vinylaromatisches Polymer hergestellt.

In Schritt 1b) wird das vinylaromatische Polymer zum chlormethylierten, vinylaromatischen Polymer der Formel (II) 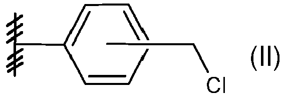 wobei 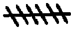 ein vinylaromatisches Polymer darstellt,
durch Chlormethylierung umgesetzt.

In Schritt 1b) wird vorzugsweise Chlormethylmethylether als Chlormethylierungsmittel eingesetzt. Der Chlormethylmethylether kann in ungereinigter Form eingesetzt werden, wobei er als Nebenkomponenten beispielsweise Methylal und Methanol enthalten kann. Der Chlormethylmethylether wird in Schritt 1b) vorzugsweise im Überschuss eingesetzt. Die Chlormethylierungsreaktion wird durch Zugabe einer Lewissäure katalysiert. Geeignete Lewissäuren sind vorzugsweise Eisen(III)chlorid, Zinkchlorid, Zinn(IV)chlorid und Aluminiumchlorid. Die Reaktionstemperatur liegt im Schritt 1b) vorzugsweise im Bereich von 40 bis 80°C. In einer bevorzugten Ausführungsform wird Schritt 1b) bei Normaldruck und bei einer Temperatur von 50 bis 60°C durchgeführt. Während der Reaktion werden die flüchtigen Bestandteile, wie vorzugsweise Salzsäure, Methanol, Methylal, Formaldehyd und teilweise Chlormethylmethylether, vorzugsweise durch Abdampfen, entfernt. Zur Entfernung des restlichen Chlormethylmethylethers, sowie zur Reinigung des Chlormethylats wird vorzugsweise mit einem Gemisch aus Methylal, Methanol und Wasser gewaschen.

Das im Schritt 1b) hergestellte chlormethylierte, vinylaromatische Polymer der Formel (II) wird vorzugsweise in Schritt a) als Edukt eingesetzt.

Im Schritt a) werden vorzugsweise Acetonitril, Propionitril, Butyronitril, Isovalerylnitrile, Benzonitril, o-Methylbenzonitril, m-Methylbenzonitril, p-Methylbenzonitril und Phenylacetonitril als Nitrile der Formel (III) eingesetzt. Ganz besonders bevorzugt wird als Nitril der Formel (III) Acetonitril eingesetzt.

In Schritt a) werden vorzugsweise anorganische oder organische Metall(II)-, Metall(III)- oder Metall(IV)salze oder Gemische aus solchen Salzen als metallhaltige Katalysatoren eingesetzt. Vorzugsweise werden als metallhaltige Katalysatoren Eisen(II)salze, Eisen(III)salze, Zink(II)salze, Zinn(II)salze oder Zinn(IV)salze und Gemische dieser Verbindungen eingesetzt. Besonders bevorzugt werden als metallhaltige Katalysatoren Eisen(II)chlorid, Eisen(II)bromid, Eisen(II)nitrat, Eisen(II)sulfat, Eisen(II)perchlorat, Eisen(II)phosphat, Eisen(II)acetat, Eisen(III)chlorid, Eisen(III)bromid, Eisen(III)nitrat, Eisen(III)sulfat, Eisen(III)perchlorat, Eisen(III)phosphat, Eisen(III)acetat, Zink(II)chlorid, Zink(II)bromid, Zink(II)nitrat, Zink(II)sulfat, Zink(II)perchlorat, Zink(II)phosphat, Zink(II)acetat, Zinn(II)chlorid, Zinn(II)bromid, Zinn(II)nitrat, Zinn(II)sulfat, Zinn(II)perchlorat, Zinn(II)phosphat, Zinn(II)acetat, Zinn(IV)chlorid, Zinn(IV)bromid, Zinn(IV)nitrat, Zinn(IV)sulfat, Zinn(IV)perchlorat, Zinn(IV)phosphat oder Zinn(IV)acetat oder Gemische dieser Salze eingesetzt. Besonders bevorzugt werden als metallhaltige Katalysatoren Zink(II)perchlorat, Zink(II)chlorid und Eisen(III)chlorid und deren Hydrate als metallhaltige Katalysatoren eingesetzt. Ganz besonders bevorzugt wird Zink(II)perchlorat, insbesondere das Hexahydrat, als metallhaltiger Katalysator eingesetzt.

Im Schritt a) werden die Nitrile der Formel (III) vorzugsweise in einem Verhältnis von 100 : 1 bis 1 : 1, besonders bevorzugt in einem Verhältnis von 50 : 1 bis 1 : 1 bezogen auf die Stoffmenge an Chlor im eingesetzten chlormethylierten, vinylaromatischen Polymer der Formel (II) eingesetzt.

In Schritt a) wird der metallhaltige Katalysator vorzugsweise in einem Verhältnis von 1 : 100 bis 1 : 1, besonders bevorzugt in einem Verhältnis von 1 : 50 bis 1 : 0.5 bezogen auf die Stoffmenge an Chlor im eingesetzten chlormethylierten, vinylaromatischem Polymer der Formel (II) eingesetzt.

Schritt a) des erfindungsgemäßen Verfahrens kann in Gegenwart oder Abwesenheit von polaren oder unpolaren, inerten Lösungsmitteln durchgeführt werden. Bevorzugt wird Schritt a) des erfindungsgemäßen Verfahrens in Abwesenheit von Lösungsmitteln durchgeführt. Als polare, inerte Lösungsmittel werden vorzugsweise Wasser oder Alkohole, wie vorzugsweise Methanol, Ethanol, Propanol oder Butanol oder Gemische dieser polaren, inerten Lösungsmittel eingesetzt.

Als unpolare, inerte Lösungsmittel werden vorzugsweise halogenierte, aliphatische oder aromatische Kohlenwasserstoffe, wie vorzugsweise Dichlormethan, Dichlorethan, Dibrommethan, Trichlormethan, Tetrachlorkohlenstoff oder Benzotrifluorid oder Mischungen dieser Lösungsmittel eingesetzt.

In einer bevorzugten Ausführungsform der Erfindung werden die chlormethylierten, vinylaromatischen Polymere der Formel (II) vorgelegt und dann mit dem Nitril der Formel (III) und dem metallhaltigen Katalysator in Kontakt gebracht. Danach wird die Mischung auf die Reaktionstemperatur erwärmt.

Die Reaktionstemperatur in Schritt a) liegt vorzugsweise zwischen 60 und 140°C, bevorzugt zwischen 70 und 110°C.

In Schritt a) liegt der Druck vorzugweise in einem Bereich von 0,8 bis 3 bar.

Die Reaktion ist vorzugsweise innerhalb von 1 bis 24 Stunden, bevorzugt innerhalb von 4 bis 12 Stunden abgeschlossen.

Die Aufarbeitung erfolgt nach dem Fachmann bekannten Verfahren zur Aufbereitung von entsprechenden Verfahrensprodukten, wie beispielsweise durch Neutralisation und Filtration der entstandenen amidomethylierten, vinylaromatischen Polymere der Formel (IV).

Die Hydrolyse der Amidomethylgruppe und damit die Freilegung der Aminomethylgruppe erfolgt im Schritt b) durch Behandlung mit mindestens einer Base oder mindestens einer Säure. Vorzugsweise werden als Basen in Schritt b) zur Hydrolyse der amidomethylierten, vinylaromatischen Polymere der Formel (IV) Alkalimetallhydroxide, Erdalkalimetallhydroxide, Ammoniak oder Hydrazin eingesetzt. Vorzugsweise werden als Säuren in Schritt b) Salpetersäure, Phosphorsäure, Schwefelsäure, Salzsäure, schwefelige Säure oder salpetrige Säure eingesetzt. Bevorzugt wird in Schritt b) mindestens eine Base zur Hydrolyse der Amidomethylgruppe und damit zur Freilegung der Aminomethylgruppe eingesetzt.

Vorzugsweise erfolgt die Hydrolyse der Amidomethylgruppe im Schritt b) bei einer Temperatur von 80°C bis 250°C, vorzugsweise von 80°C bis 190°C, falls eine Säure zur Hydrolyse eingesetzt wird. Die Konzentration der Säure in Schritt b) liegt vorzugsweise im Bereich von 5 Gew. % bis 90 Gew. %, besonders bevorzugt zwischen 10 Gew. % und 70 Gew. % bezogen auf die wässrige Phase.

Besonders bevorzugt erfolgt die Hydrolyse der Amidomethylgruppe und damit die Freilegung der Aminomethylgruppe im Schritt b) durch Behandeln des amidomethylierten, vinylaromatischen Polymers der Formel (IV) mit wässrigen oder alkoholischen Lösungen eines Alkalihydroxids, wie vorzugsweise Natriumhydroxid oder Kaliumhydroxid, bei Temperaturen von 80°C und 250°C, vorzugsweise von 120°C bis 190°C. Die Konzentration der Natronlauge beträgt vorzugsweise 20 Gew.% bis 60 Gew.-% bezogen auf die wässrige Phase.

Die Hydrolyse der Amidomethylgruppe zur Aminomethylgruppe in Schritt b) erfolgt vorzugsweise im Überschuss von Säure oder/und Base bezogen auf die Stoffmenge an eingesetzten Amidomethylgruppen.

Der in Schritt b) entstehende Anionenaustauscher der Formel (I) wird im Allgemeinen mit voll entsalztem Wasser neutral gewaschen. Es kann aber auch ohne Nachbehandlung eingesetzt werden.

Die Anionenaustauscher der Formel (I) können nach bekannten Verfahren durch Umsetzung mit Alkylierungsmitteln in sekundäre, tertiäre und quartäre amingruppenhaltige Anionenaustauscher sowie Chelatharze weiter funktionalisiert werden.

Durch das erfindungsgemäße Verfahren können Anionenaustauscher in hohen Mengen hergestellt werden.

### Bestimmung der Menge an basischen Gruppen

100 ml des aminomethylierten Polymerisates werden auf dem Stampfvolumeter eingerüttelt und anschließend mit vollentsalztem Wasser in eine Glassäule gespült. In 1 Stunde und 40 Minuten werden 1000 ml 2 gew.-%ige Natronlauge überfiltriert. Anschließend wird vollentsalztes Wasser überfiltriert bis 100 ml Eluat mit Phenolphthalein versetzt einen Verbrauch an 0,1 N (0,1 normaler) Salzsäure von höchstens 0,05 ml haben.

50 ml dieses Harzes werden in einem Becherglas mit 50 ml vollentsalztem Wasser und 100 ml 1 N Salzsäure versetzt. Die Suspension wird 30 Minuten gerührt und anschließend in eine Glassäule gefüllt. Die Flüssigkeit wird abgelassen. Es werden weitere 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz, worin V für Volumen der bei der Titration verbrauchten 1 N Natronlauge steht.

Die Stoffmenge der basischen Gruppen entspricht der Molmenge der Aminomethylgruppen im Harz.

### Bestimmung der Menge an chlormethylierten Gruppen

Die Menge an chlormethylierten Gruppen wird durch die Bestimmung des Chlorgehaltes des getrockneten Harzes über Elementaranalyse berechnet.

### Beispiele

### Beispiel 1

### 1a) Herstellung des monodispersen, makroporösen Polymers auf der Basis von Styrol, Divinylbenzol und Ethylstyrol

In einem 10 I Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,4 Gew.-% Styrol und 37,5 Gew.-% Isododekan (technisches Isomerengemisch mit hohem Anteil an Pentamethylheptan) zugegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet.

Man erhält 1893 g eines Polymers mit monodisperser Teilchengrößenverteilung.

### 1b) Chlormethylierung des monodispersen, makroporösen Polymers aus 1a)

In einem 2 Liter Sulfierkolben wurden 1120 ml einer Mischung aus Monochlordimethylether, Methylal und Eisen(III)-chlorid (14,8 g/l) vorgelegt und anschließend 240 g Perlpolymerisat aus 1a) zugegeben. Das Gemisch wurde auf 50 °C erhitzt und 6 h unter Rückfluss im Bereich von 50-55 °C gerührt. Während der Reaktionszeit wurden Salzsäure und leichtsiedende Organika abgetrieben bzw. abdestilliert. Anschließend wurde die Reaktionssuspension hintereinander mit 1200 ml Methanol, 2400 ml Methylal, 3 Mal mit 1200 ml Methanol und zum Schluss mit vollentsalztem Wasser intensiv gewaschen. Man erhielt 590 ml wasserfeuchtes, monodisperses, makroporöses, chlormethyliertes Polymerisat mit einem Chlorgehalt von 21,9 Gew.-%.

### Beispiel 2

### Umsetzung des chlormethylierten, vinylaromatischen Polymers aus Beispiel 1b) mit Acetonitril und Eisen(III)-chlorid zum amidomethylierten, vinylaromatischen Polymeren der Formel (IV)

In einem Rundkolben werden 21 g wasserfeuchtes Chlormethylat (0,13 mol Cl) aus Beispiel 1b) vorgelegt und zweimal mit je 100 ml Acetonitril gewaschen. Anschließend werden 150 ml Acetonitril (2,8 mol) und 35,1 g Eisen(III)-chlorid Hexahydrat (0,13 mol) zu den Perlen gegeben. Die Mischung wird für 6 Stunden unter Rückflusserhitzt, im Anschluss abgekühlt und mit 150 ml 7 gew.%-iger wässriger Salzsäure bei Raumtemperatur versetzt. Die Perlen werden per Filtration von der Reaktionslösung abgetrennt und dreimal mit je 200 ml vollentsalztem Wasser gewaschen.
Ausbeute: 64 ml Harz
Stickstoff-Gehalt: 5,5 Gew. % (getrocknetes Harz)

### Beispiel 3

### Umsetzung des chlormethylierten, vinylaromatischen Polymers aus Beispiel 1b) mit Acetonitril und Zink(II)-chlorid zum amidomethylierten, vinylaromatischen Polymeren der Formel (IV)

In einem Rundkolben werden 21 g wasserfeuchtes Chlormethylat (0,13 mol Cl) aus Beispiel 1b) vorgelegt und zweimal mit je 100 ml Acetonitril gewaschen. Anschließend werden 150 ml Acetonitril (2,8 mol) und 8,9 g Zink(II)-chlorid (0,07 mol) zu den Perlen gegeben. Die Mischung wird für 6 Stunden unter Rückflusserhitzt, im Anschluss abgekühlt und mit 150 ml 7 gew.%-iger wässriger Salzsäure bei Raumtemperatur versetzt. Die Perlen werden per Filtration von der Reaktionslösung abgetrennt und dreimal mit je 200 ml vollentsalztem Wasser gewaschen.
Ausbeute: 61 ml Harz
Stickstoff-Gehalt: 4,6 Gew.% (getrocknetes Harz)

### Beispiel 4

### Umsetzung des chlormethylierten, vinylaromatischen Polymers aus Beispiel 1b) mit Acetonitril und Zink(II)-perchlorat Hexahydrat zum Anionenaustauscher der Formel (I)

a) In einem Rundkolben werden 165,8 g wasserfeuchtes Chlormethylat (1,085 mol Cl) aus Beispiel 1b) vorgelegt und zweimal mit je 500 ml Acetonitril gewaschen. Anschließend werden 1200 ml Acetonitril (22,4 mol) und 201,1 g Zink(II)-perchlorat Hexahydrat (0,54 mol) zu den Perlen gegeben. Die Mischung wird für 20 Stunden unter Rückflusserhitzt, im Anschluss abgekühlt und mit 1200 ml 7 gew.%-iger wässriger Salzsäure bei Raumtemperatur versetzt. Die Perlen werden per Filtration von der Reaktionslösung abgetrennt und dreimal mit je 200 ml vollentsalztem Wasser gewaschen.
   Ausbeute: 548 ml Harz
   Stickstoff-Gehalt: 7,0 Gew. % (getrocknetes Harz)
b) Hydrolyse des amidomethylierten, vinylaromatischen Polymers aus Beispiel 4a)

Zu 250 ml amidomethyliertem Polymeren aus Beispiel 4a) werden 103,2 g 50 gew.-%ige Natronlauge und 232 ml vollentsalztes Wasser bei Raumtemperatur zudosiert. Die Suspension wird in 2 Stunden auf 180°C erhitzt und 8 Stunden bei dieser Temperatur gerührt. Das erhaltene Polymer wird mit vollentsalztem Wasser gewaschen.
Ausbeute an aminomethyliertem Polymer: 188 ml
Bestimmung der Menge an basischen Gruppen : 2,17 mol/ Liter Harz

### Beispiel 5

### Umsetzung des chlormethylierten Perlpolymerisats aus Beispiel 1b) mit Benzonitril und Zink(II)-chlorid zum amidomethylierten, vinylaromatischen Polymeren der Formel (IV)

In einem Rundkolben werden 17 g wasserfeuchtes Chlormethylat (0,11 mol Cl) aus Beispiel 1b vorgelegt und zweimal mit je 50 ml Benzonitril gewaschen. Anschließend werden 120 ml Benzonitril (1,15 mol) und 7,2 g Zink(II)-chlorid (0,05 mol) zu den Perlen gegeben. Die Mischung wird für 6 Stunden auf 80°C erhitzt, im Anschluss abgekühlt und mit 120 ml 7 gew.%-ige wässrige Salzsäure bei Raumtemperatur versetzt. Die Perlen werden per Filtration von der Reaktionslösung abgetrennt, dreimal mit je 200 ml Aceton und dreimal mit je 200 ml vollentsalztem Wasser gewaschen.
Ausbeute: 50 ml Harz
Stickstoff-Gehalt: 3,5 Gew.% (getrocknetes Harz)

## Patentansprüche

1. Verfahren zur Herstellung von Anionenaustauschern der Formel (I) 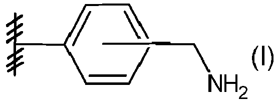 wobei 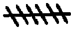 einen vinylaromatischen Polymerrest darstellt,
**dadurch gekennzeichnet, dass**
in einem Schritt a) chlormethyliertes, vinylaromatisches Polymer der Formel (II) 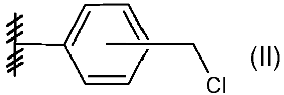 wobei 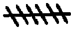 die oben genannte Bedeutung besitzt, mit mindestens einem Nitril der Formel (III)
R¹CN (III)
wobei R¹ = geradkettiges, zyklisches oder verzweigtes C₁-C₈-Alkyl, Phenyl oder Benzyl ist, und das Phenyl und Benzyl durch mindestens einen geradkettigen, zyklischen oder verzweigten C₁-C₈-Alkylrest substituiert sein kann,
in Gegenwart eines metallhaltigen Katalysators zu einem amidomethylierten, vinylaromatischen Polymer der Formel (IV) 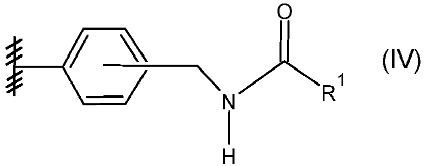 umgesetzt wird und R¹ die oben genannte Bedeutung besitzt und
das amidomethylierte, vinylaromatische Polymer der Formel (IV) in einem Schritt b) durch Umsetzung mit einer Säure oder Base zum Anionenaustauscher der Formel (I) hydrolysiert wird.

2. Verfahren gemäß Anspruch 1, **dadurch gekennzeichnet, dass** R¹ = geradkettiges oder verzweigtes C₁-C₄-Alkyl in Formel (III) ist.

3. Verfahren gemäß einem der Ansprüche 1 oder 2, **dadurch gekennzeichnet, dass** als Nitril der Formel (III) Acetonitril eingesetzt wird.

4. Verfahren gemäß einem oder mehreren der Ansprüche 1 bis 3, **dadurch gekennzeichnet, dass** als metallhaltige Katalysatoren anorganische oder organische Metall(II)-, Metall(III)- oder Metall(IV)salze oder Gemische aus solchen Salzen eingesetzt werden

5. Verfahren gemäß einem oder mehreren der Ansprüche 1 bis 4, **dadurch gekennzeichnet, dass** als metallhaltige Katalysatoren Eisen(II)salze, Eisen(III)salze, Zink(II)salze, Zinn(II)salze oder Zinn(IV)salze und Gemische dieser Verbindungen eingesetzt werden.

6. Verfahren gemäß einem oder mehreren der Ansprüche 1 bis 5, **dadurch gekennzeichnet, dass** als metallhaltige Katalysatoren Zink(II)perchlorat, Zink(II)chlorid und Eisen(III)chlorid und deren Hydrate oder Gemische dieser Verbindungen eingesetzt werden.

7. Verfahren gemäß einem oder mehreren der Ansprüche 1 bis 6, **dadurch gekennzeichnet, dass** als metallhaltige Katalysatoren Zink(II)perchlorat eingesetzt wird.

8. Verfahren gemäß einem oder mehreren der Ansprüche 1 bis 7, **dadurch gekennzeichnet, dass** als chlormethyliertes, vinylaromatisches Polymer der Formel (II) ein chlormethyliertes Styrolcopolymer eingesetzt wird.

9. Verfahren gemäß Anspruch 8, **dadurch gekennzeichnet, dass** als chlormethyliertes, vinylaromatisches Polymer ein chlormethyliertes Styrol-Divinylbenzol-Copolymer der Formel (II) eingesetzt wird.

10. Verfahren gemäß einem oder mehreren der Ansprüche 1 bis 9, **dadurch gekennzeichnet, dass** die Nitrile der Formel (III) in einem Verhältnis von 100 : 1 bis 1 : 1 bezogen auf die Stoffmenge an Chlor im eingesetzten chlormethylierten, vinylaromatischen Polymer der Formel (II) in Schritt a) eingesetzt werden.

11. Verfahren gemäß einem oder mehreren der Ansprüche 1 bis 10, **dadurch gekennzeichnet, dass** metallhaltige Katalysatoren in einem Verhältnis von 1 : 100 bis 1 : 0,5 bezogen auf die Stoffmenge an eingesetztem chlormethylierten, vinylaromatischem Polymer der Formel (II) in Schritt a) eingesetzt werden.

12. Verfahren gemäß einem oder mehreren der Ansprüche 1 bis 11, **dadurch gekennzeichnet, dass** das chlormethylierte, vinylaromatische Polymer der Formel (II) 88 Mol. % bis 98 Mol. % monovinylaromatische Monomeren und 2 Mol. % bis 12 Mol. % polyvinylaromatische Monomeren bezogen auf die Gesamtstoffmenge des Polymeren enthält.

13. Verfahren gemäß einem oder mehreren der Ansprüche 1 bis 12, **dadurch gekennzeichnet, dass** das in Schritt a) eingesetzte, chlormethylierte, vinylaromatische Polymer der Formel (II) durch Umsetzung von Monomertröpfchen aus wenigstens einer monovinylaromatischen Verbindung und wenigstens einer polyvinylaromatischen Verbindung und wenigstens einem Initiator in einem Schritt 1a) und durch Chlormethylierung in einem Schritt 1b) hergestellt wird.

14. Verfahren gemäß einem oder mehreren der Ansprüche 1 bis 13, **dadurch gekennzeichnet, dass** die
